# EUROPÄISCHE PATENTANMELDUNG

(11) **EP 0 610 766 A1**
(43) Veröffentlichungstag der Anmeldung: **17.08.1994**
(21) Anmeldenummer: 94101375.7
(22) Anmeldetag: 31.01.1994
(51) Int. Cl.: F04D 15/00, H02K 7/20

(54) **Pumpenaggregat mit einem drehzahlregelbaren Elektromotor**

(30) Priorität: 06.02.1993 DE 4303479
(71) Anmelder: Licentia Patent-Verwaltungs-GmbH, D-60596 Frankfurt (DE)
(72) Erfinder: Hauke, Dieter, D-26203 Wardenburg (DE)
(74) Vertreter: Vogl, Leo, Dipl.-Ing.

(57) **Zusammenfassung**

Die Erfindung betrifft ein Pumpenaggregat mit einem drehzahlregelbaren Elektromotor (1), insbesondere für eine Geschirrspülmaschine, wobei die Rotorwelle (27) des Elektromotors (1) mit einem Wellenstummel (29) zur Mitnahme des Pumpenrades (9) in das an dem Lagerschild (13) des Elektromotors (1) angeflanschte Pumpengehäuse (12) hineinragt. Für eine optimierte Schaltung der Pumpe (3) bezüglich Pumpenleistung, Geräusche usw. wird erfindungsgemäß eine Vorrichtung für die Erfassung und/oder Steuerung der Drehzahl des Elektromotors (1) in der Trennebene zwischen dem Motorlagerschild (13) und dem Pumpengehäuse (12) angeordnet.

## Beschreibung

Die Erfindung betrifft ein Pumpenaggregat mit einem drehzahlregelbaren Elektromotor, insbesondere für eine Geschirrspülmaschine, wobei die Rotorwelle des Elektromotors mit einem Wellenstummel zur Mitnahme des Pumpenrades in das an dem Lagerschild des Elektromotors angeflanschte Pumpengehäuse hineinragt.

Durch die DE-GM 1 950 500 ist ein Pumpenaggregat der im Oberbegriff des Patentanspruchs 1 angegebenen Art bekannt, bei dem ein Pumpengehäuse und ein Elektromotor mittels Tragflansche fest miteinander verbunden sind. Dieses Aggregat weist aber keine Vorrichtung für die Erfassung bzw. Steuerung der Drehzahl und/oder der Rotorlage des Elektromotors für die Pumpe auf, welche für einen optimalen Betrieb und/oder für eine störungsfreie Schaltung dieses Pumpenaggregats z. B. in einer Geschirrspülmaschine erforderlich ist.

Aus der DE 37 17 180 C2 ist bereits ein Elektromotor mit einem Tachogenerator bekannt, welcher außerhalb des Motorgehäuses am Lagerschild befestigt ist. Durch eine derartige Anordnung bekommt das Pumpenaggregat eine große Baulänge, wodurch der Einsatz in einer Geschirrspülmaschine erschwert wird. Auch wird hierbei kein Überwachungssignal erzeugt, welches zum Umschalten der Pumpwirkung von den unteren auf die oberen Sprüharme und umgekehrt in Geschirrspülmaschinen erforderlich ist.

Der Erfindung liegt die Aufgabe zugrunde, ein Pumpenaggregat mit einem drehzahlregelbaren Elektromotor zu schaffen, das eine einfache und preisgünstige Vorrichtung zur Erkennung und/oder zur Steuerung der Drehzahl des Elektromotors und damit des Pumpenrades aufweist. Diese Aufgabe wird durch die im Patentanspruch 1 gekennzeichnete Erfindung gelöst.

Das erfindungsgemäße Pumpenaggregat zeichnet sich durch eine kompakte und kostengünstige Ausbildung aus, wobei die Vorrichtung zur Überwachung bzw. zur Steuerung der Drehzahl des Elektromotors auch bei bereits bekannten Pumpenaggregaten, die eine derartige Regelungs- und Überwachungsvorrichtung noch nicht aufweisen, ohne großen konstruktiven Aufwand nachträglich noch vorgesehen werden. Durch die Erfassung der Drehzahl des Elektromotors und damit des Pumpenrades wird eine optimale Schaltung der Pumpe, insbesondere in Geschirrspülmaschinen gewährleistet. So wird das wahlweise Schalten der Pumpe auf die oberen oder unteren Sprüharme in einer Geschirrspülmaschine erst bei einem bestimmten Pumpendruck ermöglicht.

Weitere vorteilhafte Ausgestaltungen des Erfindungsgegenstandes sind den weiteren Unteransprüchen zu entnehmen.

Die Erfindung wird anhand von Ausführungsbeispielen im folgenden näher erläutert. Es zeigen:
- Figur 1: einen Längsschnitt durch einen Teil des Pumpenaggregates in einem ersten Ausführungsbei spiel und
- Figur 2: eine zweite Ausführungsform eines Pumpenaggregates.

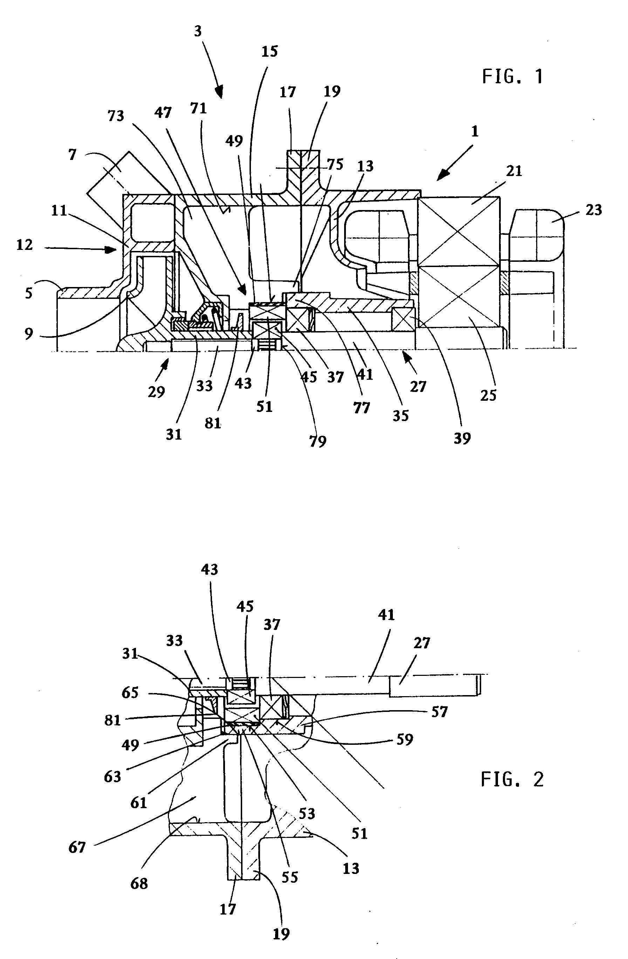

Das in den Figuren 1 und 2 dargestellte Pumpenaggregat ist insbesondere für Geschirrspülmaschinen bestimmt und besteht aus einem drehzahlregelbaren Elektromotor 1 und einer Pumpe 3, von welchen nur die wesentlichen Teile im Längsschnitt dargestellt sind. Das Pumpengehäuse 12 der Pumpe 3 besteht in üblicher Weise aus einem einen Saugstutzen 5, einen Druckstutzen 7 und ein Pumpenrad 9 aufnehmenden Pumpenoberteil 11 und einem mit diesem (11) und dem Lagerschild 13 des Elektromotors 1 fest verbindbaren Pumpenunterteil 15. Dieses Pumpenunterteil 15 und das Lagerschild 13 weisen Tragflansche 17, 19 auf, welche mittels nicht dargestellter Schraubenverbindungen oder sonstiger Verbindungen fest miteinander verbindbar sind. Der Elektromotor 1 weist in bekannter Weise einen Ständer 21 mit Ständerwicklungen 23 und einen Rotor 25 mit einer Rotorwelle 27 auf, welche mit einem Wellenstummel 29 zur Mitnahme des Pumpenrades 9 in das an dem Lagerschild 19 des Elektromotors 1 angeflanschte Pumpengehäuse 12 hineinragt. Das Pumpenrad 9 ist mit einer Nabe 31 auf dem freien, abgestuften Ende 33 des Wellenstummels 29 befestigt. Weiterhin weist das Lagerschild 13 des Elektromotors 1 eine Nabe 35 auf, an deren Enden ein A-seitiges Kugellager 37 und ein B-seitiges Kugellager 39 zur einseitigen Lagerung der Rotorwelle 27 auf deren abgestufter Lagerfläche 41 angeordnet sind. Außerdem weist die für den Elektromotor 1 und für die Pumpe 3 gemeinsame Rotorwelle 27 zwischen dem abgestuften Ende 33 und der Lagerfläche 41 eine abgestufte Lagerfläche 43 für einen Rotor 45 eines Tachogenerators 47 auf. Dieser Rotor 45 ist drehfest auf der Rotorwelle 27 angeordnet und besteht aus einem ringförmigen Permanentmagneten 45, welcher eine ihn umgebende Spule 51 beaufschlagt. Diese Spule 51 kann entweder von einem umspritzten Kunststoffmantel oder auch von einem Gehäuse 49 umgeben sein.

Da die Pumpe 3 für unterschiedliche Pumpenleistungen wahlweise einsetzbar sein soll, ist eine Vorrichtung für die Erfassung und/oder Steuerung der Drehzahl und/oder der Rotorlage in der Trennebene zwischen dem Lagerschild des Elektromotors 1 und dem Pumpengehäuse 12 angeordnet. Die den ringförmigen Permanentmagneten 45 umgebende Spule 51 kann auch in einem Spulengehäuse 49 angeordnet sein, welches gemäß Figur 2 in eine konzentrisch zu dem ringförmigen Permanentmagneten 45 ausgebildete Lagerausnehmung 53 in dem Lagerschild 13 des Elektromotors 1 angeordnet ist. Der ringförmige Permanentmagnet 45 ist übrigens vor dem in einer Nabe 57 des Lagerschildes 13 gelagerten A-seitigen Lager 37 auf der Rotorwelle 27 in dem Pumpenunterteil 15 befestigt, wobei die Lagerausnehmung 53 für das Spulengehäuse 49 in einem Verlängerungsstück 55 der Nabe 57 angeordnet ist. Die Lagerausnehmung 53 für das zylindrisch ausgebildete Spulengehäuse 49 und die gegenüber dieser (53) im Durchmesser verkleinerte Lagerausnehmung 59 für das A-seitige Kugellager 37 sind in der Nabe 57 unmittelbar hintereinander angeordnet. Eine Vorzentrierung der über Tragflansche 17, 19 zu verbindenden Pumpengehäuse 12 und Lagerschild 13 mit dem Elektromotor 1 wird dadurch begünstigt, daß das Pumpengehäuse 12 im Inneren, konzentrisch zu der Rotorwelle 27 angeordnete Zentrierrippen 61 aufweist, welche auf das freie Ende 63 der äußeren Umfangsfläche 65 der Nabe 57 aufschiebbar sind. Durch diese Zentrierrippen 61 wird einerseits der Permanentmagnet 45 zu der Spule 51 und andererseits die in den Tragflanschen 17, 19 angeordneten Bohrungen für Schraubenverbindungen auf einfachste Weise zueinander zentriert. Das Pumpenunterteil 15 ist übrigens hohlzylindrisch ausgebildet und weist mehrere, radial von der Mantelfläche 68 des Pumpenunterteiles 15 radial verlaufende Versteifungsrippen 67 auf, an welchen die Zentrierrippen 61 angeformt sind. Hierdurch wird ein einfaches Pumpenaggregat mit einem einseitig gelagerten Elektromotor 1, einem Tachogenerator 47 und einer Pumpe 3, insbesondere für eine Geschirrspülmaschine, geschaffen.

Im Rahmen der Erfindung ist es gemäß Figur 1 auch möglich, daß die Spule 51 bzw. das Spulengehäuse 49 in eine konzentrisch zu dem ringförmigen Permanentmagneten 45 ausgebildete Lagerausnehmung in dem Pumpenunterteil 15 gelagert ist. Dieses Pumpenunterteil 15 ist hohlzylindrisch ausgebildet und weist von der inneren Mantelumfangsfläche 71 radial zu der Rotorwelle 27 verlaufende Versteifungsrippen 73 auf, welche mit axial vorstehenden Zentrierrippen 75 auf das freie Ende 77 der Nabe 35 aufschieb- und arretierbar sind. Weiterhin weisen die Versteifungsrippen 73 zu den Zentrierrippen 75 konzentrisch angeordnete Aufnahmeflächen 69 als Lagerausnehmungen für das Spulengehäuse 49 auf. Hierbei sind die Zentrierrippen 75 und die Aufnahmeflächen 69 an den Versteifungsrippen 73 abgestuft hintereinander angeordnet. Auch hierdurch wird eine einfache und sichere Zentrierung des Pumpengehäuses zu dem Elektromotor 1 geschaffen.

Der ringförmige Permanentmagnet 45 wird einerseits durch eine Anschlagstufe 79 an der Rotorwelle 27 und andererseits durch die Nabe 31 des auf das freie Ende 29 der Rotorwelle 27 aufgeschobenen Nabe 31 des Pumpenrades 9 axial fixiert.

Um den Tachogenerator 47 vor eventuellen Wassertropfen zu schützen, ist eine Schleuderscheibe 81 auf der Nabe 31 des Pumpenrades 9 vor dem Tachogenerator 47 angeordnet. Mit Hilfe dieses Tachogenerators 47 wird eine einfache Vorrichtung zur Erkennung bzw. zur Steuerung der Drehzahl des Elektromotors 1 und damit des Pumpenrades 9 geschaffen. Die mittels des Tachogenerators ermittelten Drehzahlwerte werden in einem zur Steuerung des Umrichters erforderlichen und ansich bereits vorhandenen Logik-Teil mit dort vorgebbaren Steuerfunktionen zugeordneten Drehzahl-Referenzwerten verglichen und bei Koinzidenz mit den jeweiligen Referenzwerten z. B. die Ventile für die unteren oder oberen Sprüharme in einer Geschirrspülmaschine wechselweise geschlossen bzw. geöffnet. Das Schalten der Ventile erfolgt aber nur bei einem optimalen Pumpendruck. Auch kann die Drehzahl des Elektromotors 1 und damit des Pumprades 9 bezüglich der Geräusche oder sonstiger Forderungen leicht geregelt werden.

## Patentansprüche

1. Pumpenaggregat mit einem drehzahlregelbaren Elektromotor, insbesondere für eine Geschirrspülmaschine, wobei die Rotorwelle des Elektromotors mit einem Wellenstummel zur Mitnahme des Pumpenrades in das an dem Lagerschild des Elektromotors angeflanschte Pumpengehäuse hineinragt, **dadurch gekennzeichnet,** daß eine Vorrichtung für die Erfassung und/oder Steuerung der Drehzahl des Elektromotors (1) und/oder der Rotorlage in der Trennebene zwischen dem Lagerschild (13) des Elektromotors (1) und dem Pumpengehäuse (12) angeordnet ist.

2. Pumpenaggregat nach Anspruch 1, **dadurch gekennzeichnet,** daß die Vorrichtung für die Erfassung der Drehzahl und/oder der Rotorlage einen Tachogenerator (47) aufweist, dessen Rotor als auf der Motorwelle (27) fest angeordneter, mit dieser umlaufender, ringförmiger Permanentmagnet (45) ausgebildet ist, der eine ihn umgebende Spule (51) beaufschlagt.

3. Pumpenaggregat nach Anspruch 2, **dadurch gekennzeichnet,** daß die Spulen (51) in eine konzentrisch zu dem ringförmigen Permanentmagneten (45) ausgebildete Lagerausnehmung (53) in dem Lagerschild (13) des Elektromotors (1) angeordnet ist.

4. Pumpenaggregat nach Anspruch 3, **dadurch gekennzeichnet,** daß der ringförmige Permanentmagnet (45) vor dem in einer Nabe (57) des Lagerschildes (13) gelagerten A-seitigen Lager (27) auf der Rotorwelle (27) in dem Pumpenunterteil (15) befestigt ist und daß die Lagerausnehmung (53) für die Spule in einem Verlängerungstück (55) der Nabe (57) angeordnet ist.

5. Pumpenaggregat nach Anspruch 4, **dadurch gekennzeichnet,** daß die Lagerausnehmung (53) für die zylindrisch ausgebildete Spule (51) und die gegenüber dieser (53) im Durchmesser verkleinerte Lagerausnehmung (59) für das A-seitige Kugellager (37) unmittelbar hintereinander in der Nabe (57) angeordnet sind.

6. Pumpenaggregat nach Anspruch 5, **dadurch gekennzeichnet,** daß das Pumpengehäuse (12) und das Lagerschild (13) umlaufende Tragflansche (17, 19) aufweisen, welche mittels Schraubenverbindungen fest miteinander verbindbar sind, und daß das Pumpengehäuse (12) im Inneren, konzentrisch zu der Rotorwelle (27) angeordnete Zentriernasen (61) aufweist, welche auf das freie Ende (63) der äußeren Umfangsfläche (65) der Nabe (57) aufschiebbar sind.

7. Pumpenaggregat nach Anspruch 6, **dadurch gekennzeichnet,** daß das Pumpenunterteil (15) hohlzylindrisch ausgebildet ist und mehrere radial von der inneren Mantelfläche verlaufende Versteifungsrippen (67) aufweist, an welchen die Zentriernasen (61) angeformt sind.

8. Pumpenaggregat nach Anspruch 2, **dadurch gekennzeichnet,** daß die Spule (51) in eine konzentrisch zu dem ringförmigen Permanentmagneten (45) ausgebildete Lagerausnehmung in dem Pumpenunterteil (15) gelagert ist.

9. Pumpenaggregat nach Anspruch 8, wobei das Pumpengehäuse aus einem den Saugstutzen, den Druckstutzen und das Pumpenrad aufnehmende Pumpenoberteil und einem mit dem Lagerschild des Elektromotors fest verbindbaren Pumpenunterteil besteht, **dadurch gekennzeichnet,** daß das Pumpenunterteil (15) hohlzylindrisch ausgebildet und von der inneren Mantelumfangsfläche (71) mehrere radial zu der Rotorwelle (27) verlaufende Versteifungsrippen (73) aufweist, welche mit axial vorstehenden Zentriernasen (75) auf das freie Ende (77) der Nabe (35) aufschieb- und arretierbar sind und zu diesen Zentriernasen (75) konzentrisch angeordnete Aufnahmeflächen (69) als Lagerausnehmungen für das Spulengehäuse (49) aufweisen.

10. Pumpenaggregat nach Anspruch 9, **dadurch gekennzeichnet,** daß die Zentriernasen (75) und die Aufnahmeflächen (69) an den Versteifungsrippen (73) abgestuft hintereinander angeordnet sind.

11. Pumpenaggregat nach einem der vorhergehenden Ansprüche, **dadurch gekennzeichnet,** daß der ringförmige Permanentmagnet (45) einerseits durch eine Anschlagstufe (79) an der Rotorwelle (27) und andererseits durch die Nabe (31) des auf das freie Ende (29) der Rotorwelle (27) aufgeschobene Nabe (31) des Pumpenrades (29) axial fixiert wird.

12. Pumpengehäuse nach einem der vorhergehenden Ansprüche, **dadurch gekennzeichnet,** daß eine Schleuderscheibe (81) auf der Nabe (31) des Pumpenrades (9) vor dem Tachogenerator (47) angeordnet ist.

13. Pumpengehäuse nach einem der vorhergehenden Ansprüche, **dadurch gekennzeichnet,** daß die Spule (51) in einem Spulengehäuse (49) angeordnet ist.
